# EUROPÄISCHE PATENTSCHRIFT

(11) **EP 0 569 348 B1**
(45) Veröffentlichungstag und Bekanntmachung des Hinweises auf die Patenterteilung: **06.12.1995**
(21) Anmeldenummer: 93890087.5
(22) Anmeldetag: 29.04.1993
(51) Int. Cl.: A62C 27/00, A62C 39/00, B60P 3/00

(54) **Feuerwehrfahrzeug**
Technical vehicle for fire brigade
Véhicule technique pour pompiers

(30) Priorität: 07.05.1992 AT 928/92
(43) Veröffentlichungstag der Anmeldung: 10.11.1993
(73) Patentinhaber: Rosenbauer International Aktiengesellschaft, 4060 Leonding (AT)
(72) Erfinder: Hochdanninger, Franz, A-4821 Lauffen (AT); Pehersdorfer, Helmut, A-4081 Hartkirchen (AT)
(74) Vertreter: Hübscher, Heiner, Dipl.-Ing.

(56) Entgegenhaltungen:
- WO-A-91/16090
- FR-A- 323 327
- FR-A- 759 524
- FR-A- 2 651 731
- US-A- 4 195 698
- US-A- 4 858 700
- US-A- 4 875 526
- US-A- 4 917 193

## Beschreibung

Die Erfindung bezieht sich auf ein Feuerwehrfahrzeug für den technischen Einsatz, mit wenigstens einer an einer Energiequelle angeschlossenen, auf einer im Fahrzeugaufbau untergebrachten Haspel aufwickelbaren Versorgungsleitung, die ein Ansatzstück zum Ansetzen eines Werkzeuges od. dgl. aufweist (siehe z.B. FR-A-759 524).

Beim technischen Feuerwehreinsatz gibt es einen großen Bedarf an hydraulisch, pneumatisch und elektrisch angetriebenen Werkzeugen und Geräten, an Strahlrohren und anderen von einer Energiezufuhr abhängigen Einrichtungen, so daß ein für den technischen Einsatz bestimmtes Feuerwehrfahrzeug zusätzlich zu den üblichen Werkzeugen und Geräten auch mit entsprechenden Energiequellen und Energieversorgungsleitungen ausgerüstet sein muß. Diese Versorgungsleitungen, seien es elektrische Kabel, Hydraulik- oder Pneumatikleitungen od. dgl., werden auf Haspeln aufgewickelt, die an möglichst zugänglichen Stellen des Fahrzeugaufbaues vorgesehen sind und bei Bedarf ein Abziehen der jeweiligen Versorgungsleitungen ermöglichen. Aus Platzgründen sind daher zwangsweise die Haspeln mit den Versorgungsleitungen rund um das Fahrzeug verteilt angeordnet, so daß im Einsatzfall je nach Lage des Fahrzeuges relativ zum Einsatzort zumindest einige Haspeln an der dem Einsatzort abgewandten Fahrzeugseite liegen und Schwierigkeiten beim Abziehen der Versorgungsleitungen vom Fahrzeug zum Einsatzort entstehen.

Es sind unnötige Leitungslängen in Kauf zu nehmen, es gibt ein unübersichtliches Leitungsgewirr rund um das Fahrzeug, Zeitverluste durch ein Ankuppeln der Werkzeuge und Geräte an die Versorgungsleitungen erst unmittelbar in der Nähe der Einsatzstelle sind nicht zu vermeiden und es treten gegenseitige Behinderungen beim Verlegen der Versorgungsleitungen und bei der Handhabung der angeschlossenen Werkzeuge und Geräte auf.

Der Erfindung liegt daher die Aufgabe zugrunde, diese Mängel zu beseitigen und ein Feuerwehrfahrzeug der eingangs geschilderten Art zu schaffen, das eine rationelle, geschickt und übersichtlich herzustellende Energieversorgung für seine Einsatzwerkzeuge und -geräte gewährleistet.

Die Erfindung löst diese Aufgabe dadurch, daß am Fahrzeug ein um eine Vertikalachse drehbar gelagerter Galgen mit einem oberhalb des Aufbaues angeordneten Ausleger vorgesehen ist, der endseitig einen abwärts gerichteten Tragarm für einen im Griffbereich liegenden Versorgungskopf besitzt, wobei die Versorgungsleitungen von ihren Haspeln zum Galgen und diesem entlang bis zum Versorgungskopf verlegt und längsbewegbar geführt sind und der Versorgungskopf Halterungen zum lösbaren Aufnehmen der vorzugsweise werkzeugbestückten Ansatzstücke der Versorgungsleitungen bzw. der Werkzeuge od. dgl. bildet. Unabhängig von der Lage der einzelnen Haspeln innerhalb des Fahrzeugaufbaues laufen alle Versorgungsleitungen im Versorgungskopf zusammen, so daß hier eine zentrale Energieversorgungsstelle entsteht. Durch die Verschwenkbarkeit des Galgens läßt sich dabei der Versorgungskopf und damit diese zentrale Energieversorgungsstelle direkt auf den Einsatzort ausrichten und der Einsatzort so vom Versorgungskopf aus auf kürzestem Wege erreichen. Da die Versorgungsleitungen mit ihren Ansatzstücken bzw. angesetzten Werkzeugen einfach aus den Halterungen des Versorgungskopfes entnehmbar sind und wegen ihrer längsbewegbaren Führung entlang dem Galgen auch vom Versorgungskopf aus abgezogen werden können, ist es möglich, diese Versorgungsleitungen auf schnellstem Wege zum Einsatzort zu bringen. Die jeweils erforderlichen Versorgungsleitungen werden einzeln aus dem Versorgungskopf herausgezogen und auch bei einem Bedarf an mehreren Leitungen kommt es automatisch zu einem übersichtlichen, annähernd parallelen Verlegen der Versorgungsleitungen vom Fahrzeug zur Einsatzstelle. Sind in vorteilhafter Weise die Werkzeuge und Geräte in den Ansatzstücken der Versorgungsleitungen eingesetzt und damit griffbereit im Versorgungskopf fixiert, können ohne Verzögerung direkt die Werkzeuge abgenommen und zusammen mit der Versorgungsleitung an den Einsatzort gebracht werden, wodurch stets richtig an die jeweiligen Versorgungsleitungen angeschlossene Werkzeuge zur Verfügung stehen und auch sofort einsatzbereit sind. Die ordentliche Verlegung der Versorgungsleitungen bringt darüber hinaus eine Vergrößerung der Reichweite mit sich und außerdem wird im Fahrzeugaufbau wertvoller, zugänglicher Laderaum frei, der bisher durch die nun an beliebiger, geeigneter Stelle im Fahrzeug untergebrachten Haspeln beansprucht wurde.

An und für sich wäre es möglich, einen einfachen, entsprechend langen Ausleger vorzusehen, der sich mit seinem Versorgungskopf rund um das Fahrzeug verschwenken läßt. Sind allerdings hochstehende Dachaufbauten od. dgl. vorhanden oder kann der Galgen nicht mittig am Fahrzeug angeordnet werden, ist es vorteilhaft, wenn der Galgen eine teleskopartig heb- und senkbare Schwenksäule und/oder einen teleskopartig aus- und einfahrbaren Ausleger aufweist, so daß bedarfsweise durch ein Heben und Senken bzw. durch ein Aus- und Einfahren des Galgens der Versorgungskopf auch bei ungünstigen baulichen Bedingungen am Fahrzeug in die jeweils gewünschte optimale Lage gebracht werden kann. Dabei ist vorteilhafterweise die Schwenksäule mit einem Hubantrieb ausgestattet, der hingegen beim Ausleger unnötig ist, da dieser auch händisch leicht über den Versorgungskopf betätigt werden kann. Selbstverständlich werden durch die Verstellbarkeit des Galgens nicht nur dessen Reichweite und Schwenkbereich vergrößert, sondern er läßt sich dadurch auch einfacher am Fahrzeug unterbringen und in eine zweckmäßige, nicht störende Außerbetriebsstellung bringen.

Um das Aufwickeln der ausgezogenen Versorgungsleitungen zu vereinfachen, sind die Haspeln mit Wickelantrieben ausgerüstet. Sind dabei am Versorgungskopf Schalter zum Betätigen der Haspel-Wickelantriebe vorgesehen, können die Versorgungsleitungen nach dem Einsatz auch geschickt wieder versorgt werden, da dazu lediglich der Bedienungsmann mit dem Werkzeug od. dgl. zum Versorgungskopf zurückzugehen und den Schalter zu drücken braucht, um für die erforderliche Aufwicklung der Versorgungsleitung zu sorgen.

Ist der Galgen mit einer Beleuchtungseinrichtung ausgestattet, kann zusätzlich zur zentralen Energieversorgungsstelle auch gleich eine für den jeweiligen Einsatzort optimale Beleuchtung sichergestellt werden, da ja der Galgen im Einsatzfall auf den Einsatzort ausgerichtet wird und damit gleichzeitig auch die Scheinwerfer auf die Einsatzstelle richtet.

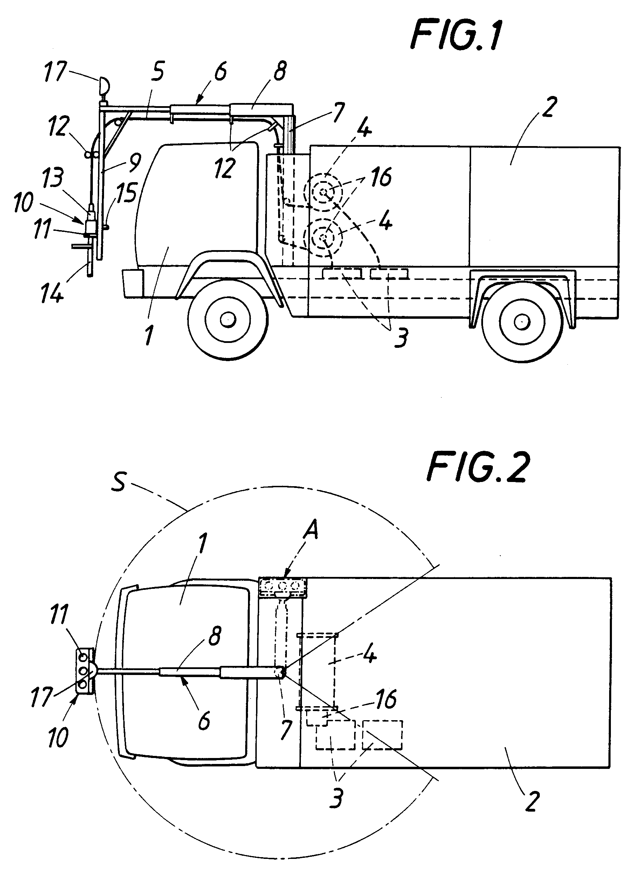

In der Zeichnung ist der Erfingungsgegenstand in einem Ausführungsbeispiel rein schematisch veranschaulicht, und zwar zeigen
- Fig. 1 und 2: ein erfindungsgemäßes Feuerwehrfahrzeug in Seitenansicht und Draufsicht.

Ein Feuerwehrfahrzeug 1 für den technischen Einsatz weist einen kastenförmigen Aufbau 2 zur Aufnahme verschiedener Werkzeuge und Geräte auf. Um hydraulische Rettungsgeräte, Druckluftwerkzeuge, elektrische Geräte, Strahlrohre od. dgl. energieabhängige Gerätschaften einsetzen zu können, gibt es außerdem entsprechende Energiequellen 3, beispielsweise Hydraulikpumpen, Windkessel, Batterien u. dgl., und im Aufbau 2 untergebrachte Haspeln 4 zum Aufwickeln der erforderlichen Versorgungsleitungen 5. Um die Energieversorgung zu koordinieren und eine zentrale Energieversorgungsstelle einrichten zu können, ist am Fahrzeug ein um eine Vertikalachse drehbar gelagerter Galgen 6 vorgesehen, der sich aus einer drehbaren Schwenksäule 7 und einem oberhalb des Aufbaues 2 liegenden Ausleger 8 zusammensetzt. Endseitig am Ausleger 8 ist ein abwärtsgerichteter Tragarm 9 für einen in Griffhöhe angeordneten Versorgungskopf 10 befestigt, welcher Versorgungskopf 10 Halterungen 11 für die einzelnen Versorgungsleitungen 5 bildet. Die Versorgungsleitungen 5 sind von ihren Haspeln 4 zum Galgen 6 und diesem entlang bis zum Versorgungskopf 10 verlegt und über Rollen 12 od. dgl. Führungselemente längsbewegbar geführt, wobei die Versorgungsleitungen Ansatzstücke 13 zum Einsetzen von Werkzeugen 14 aufweisen und mit diesen Ansatzstücken 13 oder den darin eingesetzten Werkzeugen 14 lösbar in den Halterungen 11 des Versorgungskopfes 10 stecken.

Der Galgen 6 erlaubt es, den Versorgungskopf 10, in dem alle Versorgungsleitungen 5 zusammenlaufen, so zu verschwenken, daß er auf den jeweiligen Einsatzort ausgerichtet ist und die Versorgungsleitungen auf kürzestem Wege zum Einsatzort gezogen werden können. Dazu brauchen die jeweiligen Ansatzstücke 13 bzw. Werkzeuge 14 nur aus den Halterungen 11 des Versorgungskopfes 10 herausgenommen und in Richtung zum Einsatzort gebracht zu werden, womit gleichzeitig auch die zugehörigen Versorgungsleitungen 5 von den Haspeln 4 abgewickelt und dem Galgen 6 entlang abgezogen werden. Es kommt zu einem geschickten, ordentlichen und übersichtlichen Auszug der Versorgungsleitungen 5 und zu einer raschen, verzögerungsfreien Einsatzbereitschaft der Werkzeuge 14.

Ist, wie beim dargestellten Ausführungsbeispiel angedeutet, der Ausleger 8 teleskopartig aus- und einfahrbar, läßt sich der Schwenkbereich S des Auslegers 8 an die Fahrzeugkontur anpassen, wobei für die Praxis meist ein lediglich die Front- und Seitenbereiche des Fahrzeuges erfassender Schwenkbereich genügt. Durch ein Zusammenschieben des Auslegers 8 ergibt sich eine wenig ausladende Außerbetriebstellung A, in der der Galgen 6 gut und ohne Behinderung anderer Fahrzeugfunktionen untergebracht werden kann (strichpunktierte Darstellung in Fig. 2). Ist zusätzlich die Schwenksäule 7 teleskopartig hochfahrbar, lassen sich auch spezielle Dachaufbauten od. dgl. des Feuerwehrfahrzeuges 1 überwinden und die Einsatzmöglichkeiten des Galgen 6 verbessern.

Zweckmäßigerweise sind am Versorgungskopf 10 Schalter 15 zum Betätigen von Wickelantrieben 16 für die Haspeln 4 angeordnet, so daß unmittelbar vom Versorgungskopf aus auch das Aufwickeln der abgezogenen Versorgungsleitungen nach dem Einsatz bewerkstelligt werden kann. Ist außerdem am Galgen 6 eine Beleuchtungseinrichtung 17 installiert, läßt sich gleichzeitig mit der zentralen Energieversorgungsstelle sogar eine Beleuchtung unmittelbar auf den Einsatzort ausrichten.

## Patentansprüche

1. Feuerwehrfahrzeug (1) für den technischen Einsatz, mit wenigstens einer an einer Energiequelle (3) angeschlossenen, auf einer im Fahrzeugaufbau (2) untergebrachten Haspel (4) aufwickelbaren Versorgungsleitung (5), die ein Ansatzstück (13) zum Ansetzen eines Werkzeuges (14) od. dgl. aufweist, dadurch gekennzeichnet, daß am Fahrzeug (1) ein um eine Vertikalachse drehbar gelagerter Galgen (6) mit einem oberhalb des Aufbaues (2) angeordneter Ausleger (8) vorgesehen ist, der endseitig einen abwärts gerichteten Tragarm (9) für einen im Griffbereich liegenden Versorgungskopf (10) besitzt, wobei die Versorgungsleitungen (5) von ihren Haspeln (4) zum Galgen (6) und diesem entlang bis zum Versorgungskopf (10) verlegt und längsbewegbar geführt sind und der Versorgungskopf (10) Halterungen (11) zum lösbaren Aufnehmen der vorzugsweise werkzeugbestückten Ansatzstücke (13) der Vesorgungsleitungen (5) bzw. der Werkzeuge (14) bildet.

2. Feuerwehrfahrzeug nach Anspruch 1, dadurch gekennzeichnet, daß der Galgen (6) eine teleskopartig heb- und senkbare Schwenksäule (7) und/oder einen teleskopartig aus- und einfahrbaren Ausleger (8) aufweist.

3. Feuerwehrfahrzeug nach Anspruch 1 oder 2, mit Wickelantrieben für die Haspeln, dadurch gekennzeichnet, daß am Versorgunskopf (10) Schalter (15) zum Betätigen der Haspel-Wickelantriebe (16) vorgesehen sind.

4. Feuerwehrfahrzeug nach einem der Ansprüche 1 - 3, dadurch gekennzeichnet, daß der Galgen (6) mit einer Beleuchtungseinrichtung (17) ausgestattet ist.

## Claims

1. A firefighting vehicle (1) for industrial use, comprising at least one supply line (5) which is connected to an energy source (3), is adapted to be wound on a reel (4) accommodated in the vehicle superstructure (2), and has an adapter (13) for attachment of a tool (14) or the like, characterised in that a bracket (6) mounted for rotation about a vertical axis, and having a boom (8) disposed above the superstructure (2) is provided on the vehicle (1), said boom (8) having at the end a downwardly directed arm (9) for a supply head (10) disposed within reach, the supply lines (5) being laid from their reels (4) to the bracket (6) and along the latter as far as the supply head (10) and being guided for longitudinal movement, and the supply head (10) forms holders (11) for releasably receiving the preferably tool-equipped adapters (13) of the supply lines (5) and of the tools (14).

2. A firefighting vehicle according to claim 1, characterised in that the bracket (6) comprises a telescopically raisable and lowerable pivoting column (7) and/or a telescopically extending and retractable boom (8).

3. A firefighting vehicle according to claim 1 or 2, with winding drives for the reels, characterised in that switches (15) for actuating the reel winding drives (16) are provided on the supply head (10).

4. A firefighting vehicle according to any one of claims 1 to 3, characterised in that the bracket (6) is equipped with an illuminating means (17).

## Revendications

1. Véhicule de lutte anti-incendie (1), pour utilisation technique, avec au moins une ligne d'alimentation (5), raccordée à une source d'énergie (3), susceptible d'être enroulée sur un treuil (4) logé dans la carrosserie de véhicule (2), ligne d'alimentation présentant une pièce appendice (13) destinée au montage d'un outil (14) ou analogue, caractérisé en ce que sur le véhicule (1) est prévue une flèche (6), montée à rotation autour d'un axe vertical, avec un bras articulé (8), disposé au-dessus de la carrosserie (2) et ayant côté extrémité un bras support (9), orienté vers le bas, pour une tête d'alimentation (10) située dans la zone de prise, les lignes d'alimentation (5) étant installées de leurs treuils (4) à la flèche (6) et le long de celle-ci, jusqu'à la tête d'alimentation (10) et étant guidées d'une façon permettant un déplacement longitudinal, et la tête d'alimentation (10) constituant des fixations (11) permettant de recevoir de façon désolidarisable les pièces appendices (13), de préférence équipées d'outil, des lignes d'alimentation (5), respectivement des outils (14).

2. Véhicule de lutte anti-incendie selon la revendication 1, caractérisé en ce que la flèche (6) présente une colonne de pivotement (7) levable et abaissable de façon télescopique et/ou un bras articulé (8) susceptible d'être déployé et rétracté de façon télescopique.

3. Véhicule de lutte anti-incendie selon la revendication 1 ou 2, caractérisé en ce que des interrupteurs (15) destinés à actionner les entraînements d'enroulement de treuil (16) sont prévus sur la tête d'alimentation (10).

4. Véhicule de lutte anti-incendie selon l'une des revendications 1 à 3, caractérisé en ce que la flèche (6) est équipée d'un dispositif d'éclairage (17).
